# EUROPÄISCHE PATENTSCHRIFT

(11) **EP 2 969 464 B1**
(45) Veröffentlichungstag und Bekanntmachung des Hinweises auf die Patenterteilung: **20.02.2019**
(21) Anmeldenummer: 14710550.6
(22) Anmeldetag: 14.03.2014
(51) Int. Cl.: B29C 45/17, B65G 65/40, B65G 65/16, B65G 65/18, B65G 65/42, B65G 65/48, B65G 47/14, H05K 13/02, B29C 45/72, B29C 49/42

(54) **VERFAHREN UND VORRICHTUNG ZUM BESTÜCKEN VON SPRITZGUSSTEILEN**
PROCESS AND DEVICE FOR ALIMENTATION OF INJECTION MOULDED PARTS
PROCÉDÉ ET DISPOSITIF POUR ALIMENTATION DE PIÈCES PAR MOULAGE PAR INJECTION

(30) Priorität: 14.03.2013 DE 102013204425
(43) Veröffentlichungstag der Anmeldung: 20.01.2016
(73) Patentinhaber: HEKUMA GmbH, Dornierstrasse 14 85399 Hallbergmoos (DE)
(72) Erfinder: FALTENBACHER, Christian, 85386 Eching (DE); HILPERT, Manuel, 85386 Eching (DE); HINTERMAIER, Konrad, 85386 Eching (DE)
(74) Vertreter: Klingseisen, Franz
(86) Internationale Anmeldenummer: PCT/EP2014/055121
(87) Internationale Veröffentlichungsnummer: WO 2014/140290

(56) Entgegenhaltungen:
- EP-A2- 0 135 372
- WO-A1-2011/003507
- DE-A1- 10 034 160
- DE-U1-202012 005 247
- GB-A- 485 251
- JP-A- H03 120 124
- JP-U- S5 413 194

## Beschreibung

Die Erfindung betrifft ein Verfahren und eine Vorrichtung zum Bestücken von Spritzgussteilen, insbesondere von durch Spritzgießen hergestellten Pipettenspitzen, in denen zylinderförmige Filterelemente eingesetzt werden.

JP H03 120124 A zeigt einen trichterförmigen Aufnahmebereich für zylindrische Elemente um eine mittige Aufwölbung, wobei der ringförmige Aufnahmebereich durch radiale Trennwände ein Einzelbereiche unterteilt ist, in denen jeweils ein Rohr von der tiefsten Stelle vorsteht. Die Rohre münden über einer verdrehbaren Scheibe mit Bohrungen, wobei durch Verdrehen der Scheibe die Bohrungen mit der Mündungsöffnung der Rohre ausgerichtet werden können, sodass ein zylindrisches Element in eine Bohrung der Scheibe gelangen kann, von der aus das zylindrische Element über Schlauchleitungen weitergeführt wird. WO 2011 003 507 zeigt allgemein die Idee der gleichzeitige Ausrichtung und Zulieferung beim Verpackung von zylindrischen Elementen/ von als Pipettenspitzen oder medizinische Reaktionsgefäße ausgebildeten Kunststoffspritzgussteilen.

Pipettenspitzen werden in größeren Gruppen durch Spritzgießen hergestellt und über eine Transfereinrichtung beispielsweise in einem Zwischenspeicher in Gruppen angeordnet, worauf eine vorgegebene Gruppe von Pipettenspitzen in eine Verpackungseinheit überführt wird. Vor dem Verpacken müssen die Pipettenspitzen mit einem Filter versehen werden, der als zylindrisches Element in die röhrenförmigen Pipettenspitzen einzuführen ist, damit später beim Gebrauch der Pipette ein Schutz vor Kontamination durch Fremd-, DNA oder andere biologische, radioaktive oder korrosiven Substanzen vorhanden ist. Weiterhin soll ein solches Filterelement das Eindringen von Flüssigkeiten und Aerosoldämpfen in die Pipette verhindern. Das Material der Filterelemente ist luftdurchlässig, aber flüssigkeitsundurchlässig.

Die Bestückung der Pipettenspitzen mit jeweils einem Filterelement ist einerseits wegen der Taktzeit und andererseits wegen der engen Anordnung der einzelnen Pipettenspitzen in einer Gruppe schwierig. Beispielsweise werden 8 x 12 Pipettenspitzen in einem Raster von 9 x 9 mm angeordnet.

Ein weiteres Problem liegt darin, dass mit einer Bestückungseinrichtung auch unterschiedliche Größen und Formen von Pipettenspitzen mit unterschiedlich großen Filterelementen bestückt werden sollen. Durch einen Austausch des Werkzeugs in der Spritzgussmaschine können unterschiedliche Formen von Pipettenspitzen bereitgestellt werden, wobei es erwünscht ist, nicht für jede Form der Pipettenspitzen eine gesonderte Bestückungseinrichtung vorzusehen.

Der Erfindung liegt die Aufgabe zugrunde, ein Verfahren und eine Vorrichtung zum Bestücken von durch Spritzgießen hergestellten Pipettenspitzen vorzuschlagen, die den zuvor geschilderten Anforderungen gerecht wird.

Erfindungsgemäß werden die zylindrischen Filterelemente ungeordnet in einen Sammelbehälter überführt, dessen Boden eine Siebplatte bildet, wobei unter der Siebplatte eine Pufferplatte mit Durchtrittsöffnungen entsprechend den Sieböffnungen in der Siebplatte angeordnet ist. Unter der Pufferplatte ist eine Transferplatte mit entsprechenden Ausnehmungen zur Aufnahme der Filterelemente angeordnet, mittels der die Filterelemente in vorgegebenen Gruppen über eine entsprechende Gruppe von Pipettenspitzen bewegt werden kann, wobei die Filterelemente durch eine Ausstoßeinrichtung in die Pipettenspitzen überführt werden.

Nach der Erfindung wird ein Verfahren zum Ausrichten von zylindrischen Einzelelementen, insbesondere zylindrischen Filterelementen, zum Bestücken von Spritzgussteilen, insbesondere Pipettenspitzen vorgesehen, das folgende Schritte umfasst: Aufnehmen der zylindrischen Filterelemente als Schüttgut in einem Aufnahmebehälter, dessen Boden als Siebplatte mit dem Durchmesser der Filterelemente entsprechenden Bohrungen ausgebildet ist,
Ausführen einer Rüttelbewegung am Aufnahmebehälter zum Überführen der ungeordneten Filterelemente in die Bohrungen der Siebplatte,
Überführen der Filterelemente von der Siebplatte in Bohrungen einer Pufferplatte, Bereithalten der Filterelemente in einer vorgegebenen Position in den Bohrungen der Pufferplatte,
Überführen der Filterelemente von der Pufferplatte in die Bohrungen einer Transferplatte, sobald alle Bohrungen der Pufferplatte mit einem Filterelement besetzt sind, und
Überführen der in der Transferplatte in Gruppen angeordneten Filterelemente zu einer Handlingeinrichtung oder einer weiteren Arbeitsstation..

In der Pufferplatte werden die Filterelemente vorteilhafterweise durch eine steuerbare Rückhalteeinrichtung gehalten, bis alle Bohrungen der Pufferplatte mit wenigstens einem Filterelement besetzt sind.

Vorteilhafterweise wird die Rückhalteeinrichtung durch Anlegen von Vakuum auf dem Umfang der Bohrungen in der Siebplatte ausgebildet, wobei Vakuum derart gesteuert angelegt wird, dass jeweils nur ein Filterelement freigegeben und ein folgendes Filterelement zurückgehalten wird..
Eine Rückhalteeinrichtung in Form von Saugbohrungen auf dem Umfang der Bohrungen in der Pufferplatte ermöglicht eine hohe Dichte der Aufnahmebohrungen in der Pufferplatte pro Flächeneinheit.
Es ist aber auch möglich, eine mechanische Rückhalteeinrichtung vorzusehen, bei der ein bewegliches Element radial in die Bohrung in der Pufferplatte eingreift und wieder zurückziehbar ist
Auch ein solches mechanisches Element kann durch Anlegen von Druckluft und Vakuum gesteuert werden.

Es ist möglich, einen durch Luftdruck aufblasbaren Ring in einer Bohrung in der Pufferplatte oder am Ende einer Bohrung der Pufferplatte vorzusehen, wobei durch Verringerung des Innendurchmessers des elastischen Rings ein Filterelement gehalten und durch Anlage von Unterdruck durch radiales Aufweiten des Rings das Filterelement freigegeben wird.

Nach dem Auffüllen der Transferplatte mit Filterelementen wird die Transferplatte vorzugsweise von der Pufferplatte abgehoben und zu einer Handling-einrichtung weiterbewegt, wobei die Transferplatte eine vorgegebene Gruppe von Aufnahmeöffnungen entsprechend der Gruppe von Bohrungen in der Pufferplatte aufweist.

Der Füllgrad der Pufferplatte wird vorzugsweise durch Sensorelemente überwacht, die an der Unterseite der Transferplatte vorgesehen werden und beim Bewegen der Transferplatte zu einer Handlingeinrichtung von der Transferplatte abgehoben werden.

Zur Beschleunigung der Überführung der Filterelemente von der Pufferplatte in die Transferplatte kann vorzugsweise Unterdruck an der Transferplatte angelegt werden

Eine Vorrichtung zum Ausrichten von Elementen, insbesondere Filterelementen, zum Bestücken von Spritzgussteilen, insbesondere Pipettenspitzen, weist erfindungsgemäß einen Aufnahmebehälter zur Aufnahme der Filterelemente als Schüttgut auf, ferner eine den Boden des Aufnahmebehälters bildende Siebplatte mit Bohrungen zur Aufnahme einzelner Filterelemente, wobei unter der Siebplatte eine Pufferplatte mit Bohrungen entsprechend den Bohrungen in der Siebplatte angeordnet ist. Pufferplatte und Siebplatte führen vorteilhafterweise gemeinsam eine Rüttelbewegung aus, während eine unter der Pufferplatte angeordnete Transferplatte stationär bleibt Die Transferplatte mit Bohrungen entsprechend den Bohrungen der Pufferplatte ist relativ zur Pufferplatte beweglich unter dieser angeordnet.
Durch die getrennte Ausbildung von Siebplatte, Pufferplatte und Transferplatte können diese Bauteile leicht ausgetauscht werden, wenn andere Größen von Filterelementen verarbeitet werden sollen.

Vorteilhafterweise sind die Mündungsöffnungen der Bohrungen in der Siebplatte trichterförmig gestaltet und insbesondere mit abgerundeten Rändern versehen, um das Ausrichten der Filterelemente in die Bohrungen der Siebplatte zu erleichtern.

Die Dickenabmessung der Siebplatte bzw. die Länge der Bohrungen in der Siebplatte wird vorzugsweise größer ausgelegt als die Länge eines Filterelementes.

Die Pufferplatte kann vorteilhafterweise eine Dickenabmessung haben, die größer ist als die Längsabmessung eines Filterelementes, damit die Pufferplatte nicht nur ein einzelnes Filterelement nehmen kann, wobei eine Rückhalteeinrichtung an den einzelnen Bohrungen in der Pufferplatte vorgesehen ist, die ein Filterelement in einer vorgegebenen Position erhält und ansteuerbar freigibt.

Vorteilhafterweise wird unter jeder Bohrung der Transferplatte jeweils ein Sensorelement angeordnet, um den Füllgrad der Transferplatte zu überwachen.
Hierbei kann an jeder Bohrung der Transferplatte ein Anschluss zum Anlegen von Unterdruck vorgesehen sein..

Für einen schnellen Taktablauf wird die Transferplatte vorzugsweise als Drehplatte ausgebildet, auf deren Umfang Gruppen von Bohrungen zur Aufnehme von Filterelementen ausgebildet sind, aus denen die Filterelemente mittels einer Handlingeinrichtung entnommen werden können, Die Handlingeinrichtung kann beispielsweise mit Druck oder Unterdruck zur Entnahme der Filterelemente arbeiten.

Weitere Vorteile sind in der nachfolgenden Beschreibung und in den weiteren Ansprüchen angegeben.

Die Erfindung wird beispielsweise anhand der Zeichnung näher erläutert. Es zeigen
- Fig. 1: in einer schematischen Darstellung den Aufbau einer Vereinzelungseinrichtung,
- Fig. 2: einzelne Schritte des Überführens der Filterelemente auf eine Transferplatte,
- Fig, 3: eine auseinandergezogene Ansicht einer Vereinzelungseinrichtung,
- Fig. 4: eine Seitenansicht eines möglichen Aufbaus der Vereinzelungseinrichtung, und
- Fig. 5: eine perspektivische Ansicht einer Bestückungseinrichtung.

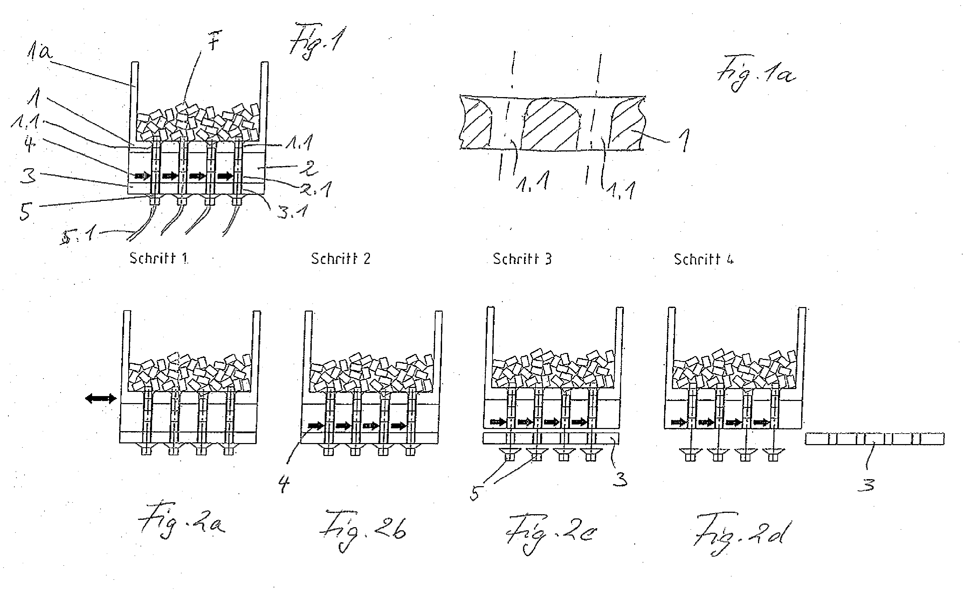

Fig. 1 zeigt in einer schematischen Schnittansicht einen Aufnahmebehälter 1a in Topfform, dessen Boden als Siebplatte 1 mit Durchbrechungen 1.1 ausgebildet ist. Der Durchmesser der Durchbrechungen bzw. Sieböffnungen 1.1 ist auf den Durchmesser von zylindrischen Filterelementen F abgestimmt, die ungeordnet als Schüttgut in den Aufnahmebehälter 1a eingefüllt werden, wie dies Fig. 1 schematisch zeigt.

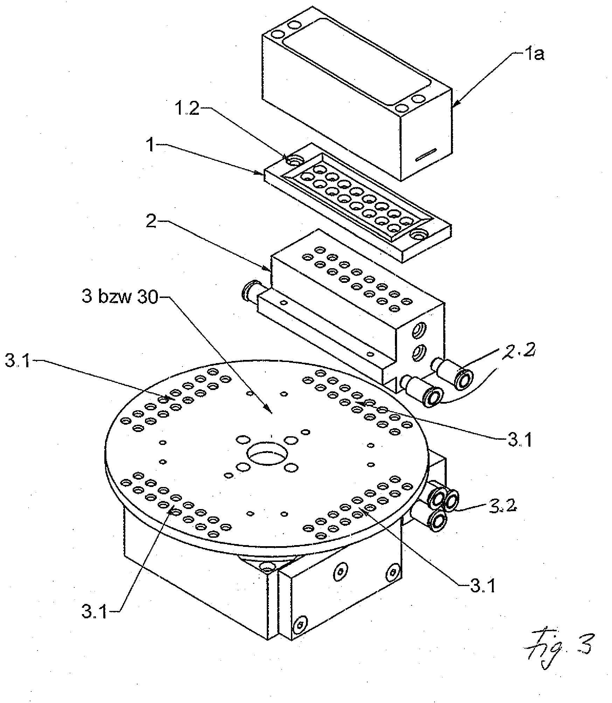

Der in Fig. 1 und 2 einstückig mit der Siebplatte 1 ausgebildete Aufnahmebehälter 1a wird vorzugsweise zweiteilig ausgebildet, wie dies Fig. 3 zeigt.

Der Übergang der Oberfläche der Siebplatte 1 in die Sieböffnungen 1.1 ist etwa trichterförmig gestaltet, vorzugsweise mit abgerundeten Rändern, wie die Detaildarstellung in Fig. 1a zeigt, damit die zylindrischen Filterelemente F durch eine Rüttelbewegung der Siebplatte 1 in horizontaler und gegebenenfalls auch in vertikaler Richtung in Fig. 1 leichter auf die Sieböffnungen 1 1 ausgerichtet und in diese eingeführt werden.

Die Siebplatte 1 hat eine vorgegebene Dickenabmessung im Verhältnis zur Länge der Filterelemente F. Vorzugsweise ist die Dicke der Siebplatte 1 etwas größer ausgeführt als die Länge der zu vereinzelnenden Filterelemente F..

Die Filterelemente F können eine Längsabmessung haben, die größer ist als der Durchmesser, es ist aber auch möglich, relativ kurze Filterelemente mit einem Durchmesser zu verarbeiten, der größer ist als die Längsabmessung in Achsrichtung des Filterelementes.

Der Durchmesser der Sieböffnungen 1.1 ist auf den Durchmesser der Filterelemente F so abgestimmt, dass der Durchmesser der Sieböffnung etwas größer ist als der Durchmesser eines Filterelementes F, damit dieses in der Siebbohrung durch Schwerkraftwirkung nach unten gleiten kann.

Unterhalb der Siebplatte 1 ist eine Pufferplatte 2 mit den Sieböffnungen 1.1 entsprechenden Durchbrechungen bzw. Bohrungen 2.1 vorgesehen, sodass die in die Sieböffnungen 1.1 eingeführten Filterelemente F ungehindert in die Bohrungen 2.1 der Pufferplatte 2 gelangen können. Die Bohrungen 2.1 in der Pufferplatte 2 bilden somit eine Verlängerung der Siebbohrungen 1.1.

Die Dicke der Pufferplatte 2 ist größer ausgelegt als die Länge eines einzelnen Filterelementes F. In der Pufferplatte 2 wird eine in Fig. 1 allgemein mit 4 bezeichnete Rückhalteeinrichtung an jeder einzelnen Bohrung 2.1 vorgesehen, durch die Filterelemente F in den einzelnen Bohrungen 2.1 auf einer vorbestimmten Höhe gehalten werden, sodass sie nicht nach unten austreten können.

Die Rückhalteeinrichtung 4 kann beispielsweise so ausgebildet werden, dass die Filterelemente durch seitlich an den Bohrungen 2.1 bzw. auf dem Umfang der Bohrungen angelegtes Vakuum in den einzelnen Bohrungen 2.1 der Pufferplatte 2 gehalten werden.

Es ist aber auch eine mechanische Rückhalteeinrichtung möglich, bei der ein seitlich in die Bohrung eingreifendes Element ein Filterelement F in der vorgegebenen Position hält und durch seitliches Zurückziehen freigibt.

Solche Elemente können durch eine gemeinsame Betätigungseinrichtung gesteuert werden,

Bevorzugt werden auf dem Umfang der Bohrungen 2.1 der Pufferplatte Saugöffnungen vorgesehen, durch die Vakuum angelegt wird. Auf diese Weise ist eine dichte Packung von Bohrungen 2.1 pro Flächeneinheit möglich, weil durch Kanäle in der Pufferplatte 2 eine platzsparende Rückhalteeinrichtung 4 ausgebildet werden kann,

Diese Saugöffnungen auf dem Umfang der Bohrungen 2.1 der Pufferplatte können rund oder auch schlitzförmig ausgebildet sein, wobei in Achsrichtung der Bohrungen verlaufende Schlitze auf die Länge eines Filterelementes abgestimmt sein können.

Es ist auch möglich, nur über einen Teil des Umfangs Saugöffnungen vorzusehen, sodass ein Filterelement in der Bohrung 2.1 beispielsweise auf einer Hälfte des Umfangs durch Vakuum anliegend gehalten wird.

Bei der Rüttelbewegung der Siebplatte 1 wird die Pufferplatte 2 mitbewegt, sodass an der Übergangsstelle zwischen Sieb- und Pufferplatte vorhandene Filterelemente nicht eingeklemmt werden.

Unterhalb der Pufferplatte 2 ist eine Transferplatte 3 angeordnet mit Aufnahmebohrungen 3.1 entsprechend den Bohrungen in der Sieb- und Pufferplatte. Diese Transferplatte 3 dient zur Weiterbeförderung der Filterelemente F an eine Übergabestation, die nachfolgend näher erläutert wird.

Unterhalb der Transferplatte 3 ist im Bereich jeder Aufnahmebohrung 3.1 ein Sensorelement 5, beispielsweise ein Vakuumsensor, angeordnet, der die Anwesenheit eines Filterelementes F in der zugeordneten Bohrung 2.1 der Pufferplatte 2 feststellt. Die Dicke der Transferplatte 3 entspricht im Wesentlichen der Länge eines Filterelementes F, es ist aber nicht erforderlich, die Dicke der Transferplatte auf die Länge eines Filterelementes exakt abzustimmen.

Durch die Sensorelemente 5 kann festgestellt werden, ob in den einzelnen Bohrungen 2.1 der Pufferplatte 2 bereits ein Filterelement F sich in der Bereitstellungsposition an der Rückhalteeinrichtung 4 befindet. Sobald alle Bohrungen 2.1 der Pufferplatte 2 mit einem Filterelement F belegt sind, wird die Rückhaltefunktion der Rückhalteeinrichtung 4 aufgehoben, sodass jeweils ein Filterelement F aus jeder einzelnen Bohrung 2.1 in die Transferplatte 3 gelangen kann. Nach Freigabe eines einzelnen Filterelementes F in der Bohrung der Pufferplatte 2.1 wird die Rückhaltefunktion wieder aktiviert, sodass jeweils nur ein Filterelement in die Transferplatte 3 überführt werden kann.

Die Länge der Bohrungen 2.1 in der Pufferplatte 2 kann größer ausgelegt sein als die Länge eines Filterelementes, sodass sich insbesondere in Verbindung mit der Siebbohrung 1.1 in der Siebplatte 1 mehrere Filterelemente stapeln können. Um die sich in einer Siebbohrung 1.1 und einer Bohrung 2.1 der Pufferplatte befindenden Filterelemente für den Übergang auf die Transferplatte 3 zu vereinzeln, ist die Rückhalteeinrichtung 4 in der Pufferplatte 2 so steuerbar ausgebildet, dass jeweils nur ein Filterelement freigegeben und das nächstfolgende Filterelement wieder zurückgehalten wird.
Im Falle einer Rückhalteeinrichtung 4 mittels Vakuum kann das Anlegen von Vakuum kurzzeitig unterbrochen werden, damit ein Filterelement freigegeben wird und durch Schwerkraft nach unten fällt, während durch erneutes Anlegen von Vakuum das folgende Filterelement wieder in einer vorgegebenen Position gehalten wird.

Es ist aber auch möglich, übereinanderliegende Saugöffnungen auf dem Umfang der Bohrungen 2.1 vorzusehen, wobei die Saugöffnungen in Achsrichtung der Bohrungen 2.1 einen solchen Abstand voneinander haben, dass die unteren Saugöffnungen auf dem Umfang eines Filterelementes liegen, während die darüber liegenden Saugöffnungen einem nachfolgenden Filterelement gegenüberliegen. Auf diese Weise kann an den oberen Saugöffnungen Vakuum angelegt bleiben, während an den unteren Saugöffnungen die Vakuumbeaufschlagung unterbrochen wird, damit das Filterelement nach unten gleiten kann. Hierauf wird der Unterdruck an den oberen Saugöffnungen unterbrochen und an den unteren Saugöffnungen angelegt, damit das nachfolgende Filterelement in der vorgegebenen Bereitstellung für den Transfer in die Transferplatte 3 gehalten wird.

In entsprechender Weise kann auch eine mechanische Rückhalteeinrichtung nicht nur an einem unteren Filterelement in einer Siebplatte 2 angreifen, sondern auch an einem darüber angeordneten Filterelement in der Bohrung 2.1 der Pufferplatte 2.

Vorzugsweise sind die Sensorelemente 5 mit einer Ansaugeinrichtung verbunden, damit beim Aufheben der Rückhaltefunktion die einzelnen Filterelemente F durch Saugwirkung in die Transferplatte 3 überführt werden, Fig 1 zeigt bei 5.1 lediglich schematisch den Anschluss der einzelnen Sensorelemente 5 an eine nicht dargestellte Vakuumeinrichtung, die taktweise gesteuert werden kann, sodass in Abhängigkeit von der Freigabe der Rückhaltefunktion kurzzeitig Vakuum angelegt wird.

Fig, 2a erläutert den ersten Schritt der Vereinzelungseinrichtung der Fig. 1, bei der die Bauteile 1 und 2 in Fig. 1 in horizontaler Richtung eine Rüttelbewegung ausführten, wie durch einen Doppelpfeil in Fig. 2a angedeutet ist. Zusätzlich zu einer horizontalen Rüttelbewegung kann auch eine leichte Schwingbewegung in vertikaler Richtung überlagert werden, um das Einführen der einzelnen Filterelemente F in die Siebbohrungen 1.1 zu erleichtern.
Bereits während der Rüttelbewegung in Fig. 2a wird die Haltefunktion der Rückhalteeinrichtung 4 aktiviert, sodass die Filterelemente F nur bis zur Rückhalteeinrichtung 4 in die einzelnen Bohrungen 2.1 der Pufferplatte 2 gelangen können,

Die Transferplatte 3 wird bei der Rüttelbewegung der Vereinzelungseinrichtung vorzugsweise nicht mitbewegt.

Sobald durch die Sensoren 5 festgestellt wird, dass alle Bohrungen 2.1 der Pufferplatte 2 mit wenigstens einem Filterelement F besetzt sind, wird die Rüttelbewegung angehalten und die Rückhaltefunktion freigegeben, sodass ein einzelnes Filterelement F aus jeder einzelnen Bohrung 2.1 der Pufferplatte 2 in die Transferplatte 3 überführt werden kann, wie dies in Fig. 2b in einem zweiten Schritt wiedergegeben ist.

Nach Auffüllen der Transferplatte 3 werden in einem dritten Schritt der Fig. 2c die Sensorelemente 5 von der Transferplatte 3 abgehoben. Zugleich oder danach wird die Transferplatte 3 von der Pufferplatte 2 abgehoben, um den Transfer zu einer Übergabestation einzuleiten.

Vorzugsweise ist auch in der Transferplatte 3 eine Einrichtung vorgesehen, welche die Filterelemente F in den Aufnahmebohrungen 3.1 der Transferplatte 3 hält. Hierfür kann beispielsweise der Innenumfang der Bohrungen 3.1 durch Aufrauen mit einem höheren Reibungskoeffizienten für das Filtermaterial versehen sein,
Zur Halterung der Filterelemente F kann auch in der Transferplatte Vakuum angelegt werden wie bei der Rückhalteeinrichtung 4. In der gleichen Weise kann auch eine mechanische Halterung der Filterelemente in der Transferplatte vorgesehen sein.

Bei einer praktischen Ausführungsform einer Halteeinrichtung mittels Vakuum kann in der Seitenwand der Bohrung in der Pufferplatte und/oder in der Transferplatte eine leichte Vertiefung ausgebildet sein, in der eine Vakuumbohrung mündet. Durch Anlegen von Vakuum wird das Filterelement seitlich an die Bohrungswandung angezogen und gehalten,

In einem vierten Schritt schließlich wird die Transferplatte 3 zu einer Übergabestation bewegt, wie Fig. 2d zeigt, wobei gleichzeitig beispielsweise mittels einer Drehplatte eine weitere Transferplatte unter der Pufferplatte 2 positioniert werden kann, damit in einem nicht dargestellten fünften Schritt durch Ansetzen der zweiten Transferplatte an der Pufferplatte 2 und Ansetzen der Sensorelemente 5 an der zweiten Transferplatte der Schritt 1 in Fig. 2a eingeleitet werden kann,

Fig. 3 zeigt in einer auseinandergezogenen Ansicht eine Vereinzelungseinrichtung mit einem gesonderten, rahmenförmig gestalteten Aufnahmebehälter 1a, Die den Boden des Aufnahmebehälters bildende Siebplatte 1 ist mit einer Zentrierbohrung 1.2 versehen, in die ein entsprechender Zentrierzapfen an der Unterseite des Aufnahmebehälters 1a eingreift. In gleicher Weise können die Pufferplatte 2 und die Drehplatte 30, die als Transferplatte 3 ausgebildet ist, aufeinander ausgerichtet werden. Die Drehplatte 30 weist auf dem Umfang bei dem dargestellten Ausführungsbeispiel vier Gruppen von Bohrungen 3.1 aufweist, von denen jeweils eine Gruppe der in Fig. 2 wiedergegebenen Transferplatte 3 entspricht.

Fig. 3 zeigt an der Pufferplatte 2 Anschlüsse 2.2 zum Anlegen von Vakuum an der Rückhalteeinrichtung 4. An der Drehplatte 30 sind ebenfalls Vakuumanschlüsse 3.2 vorgesehen.

Wenn von einer nichtdargestellten Spritzgussmaschine eine andere Form und/oder Größe von Pipettenspitzen geliefert wird, die mit Filterelementen eines anderen, entsprechenden Durchmessers bestückt werden sollen, so kann an der Vereinzelungseinrichtung die Siebplatte 1, die Pufferplatte 2 und die Transferplatte 3 ausgetauscht und durch einen anderen Satz von Siebplatte 1, Pufferplatte 2 und Transferplatte 3 ersetzt werden, die einen auf den Durchmesser der neuen Filterelemente abgestimmten Bohrungsdurchmesser aufweisen,
Auf diese Weise kann die Vereinzelungseinrichtung in einfacher Weise auf eine neue Produktlinie umgerüstet werden.

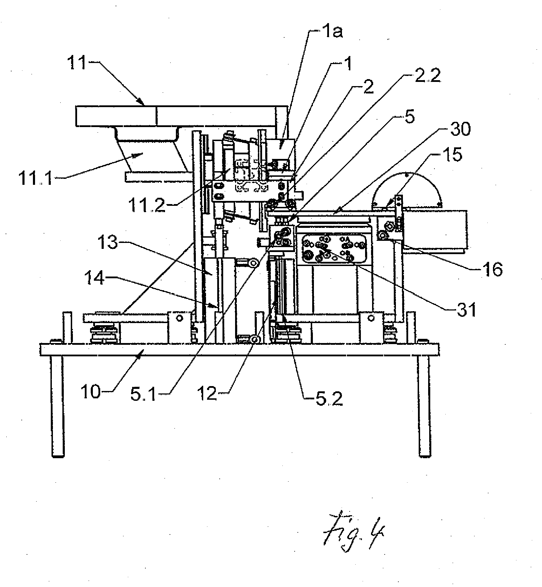

Fig. 4 zeigt eine Seitenansicht einer beispielweisen Ausführungsform einer Vereinzelungseinrichtung. Auf einem Träger 10 ist bei 11 ein Zuführsystem angedeutet, an dem die Filterelemente zugeführt werden, wobei beispielsweise mit einer Taktzeit von fünf Sekunden 32 Filterelemente zugeführt werden können. Von der Zuführungseinrichtung 11 gelangen die Filterelemente F über einen ersten Linearförderer 11.1 zu einem zweiten Linearförderer 11.2, von dem aus der Aufnahmebehälter 1a mit Filterelementen F aufgefüllt wird.

An der blockförmigen Pufferplatte 2 ist bei 2.2 ein Unterdruckanschluss wiedergegeben, der zur Aktivierung der Rückhalteeinrichtung 4 vorgesehen ist Die Sensorelemente 5 sind auf einer Hubeinrichtung 12 angeordnet und mit einem Unterdruckanschluss 5,1 versehen. Mit 5.2 ist eine Positionserkennungseinrichtung für die Sensorelemente 5 bezeichnet.

13 ist eine Hubvorrichtung, welche die Vereinzelungsvorrichtung von der Transferplatte 3 (Fig. 2c) abhebt.
14 ist eine Sensoreinrichtung zur Positionserkennung.

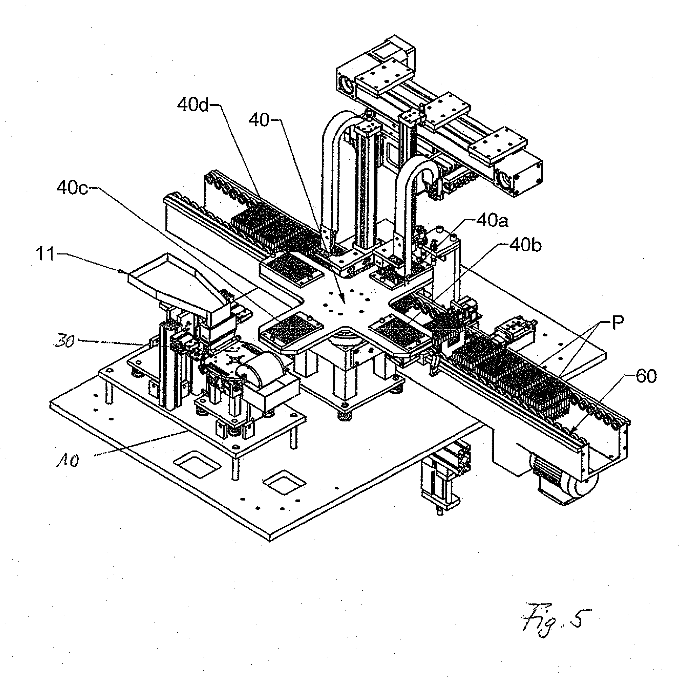

Die in Fig. 3 wiedergegebene Drehplatte 30 ist auf einem Rundschalttisch 31 angeordnet. Eine nicht dargestellte Handlingeinrichtung entnimmt die Filterelemente aus den Bohrungen der Drehplatte 30 und überführt sie beispielsweise in einen Zwischenspeicher der Bestückungseinrichtung, wie dies anhand der Fig. 5 bis 7 erläutert wird,

Fig. 5 zeigt in einer perspektivischen Ansicht die Vereinzelungseinrichtung der Fig. 4 mit Drehplatte 30 an einer Bestückungsvorrichtung, an der Gruppen von Pipettenspitzen P mit Filterelementen F bestückt werden.

Mit 40 ist in Fig. 5 ein Drehtisch bezeichnet, der kreuzförmig ausgestaltet ist und vier Gruppen von Aufnahmebohrungen für Pipettenspitzen P aufweist, wobei jeweils eine Gruppe 40a bis 40d von Bohrungen mit Pipettenspitzen P aufgefüllt wird. In der Darstellung der Fig. 5 ist eine Gruppe 40c vollständig mit Pipettenspitzen P aufgefüllt, wobei durch eine nichtdargestellte Handlingeinrichtung von der Drehplatte 30 Filterelemente F entnommen und in die Pipettenspitzen P eingesetzt werden.

Von dem Drehtisch 40 wird dann eine mit Filterelementen F bestückte Gruppe von Pipettenspitzen P auf ein Transportband 60 überführt, auf der die mit Filterelementen F bestückten Pipettenspitzen P in eine Verpackungseinheit abgelegt werden.

## Patentansprüche

1. Verfahren zum Ausrichten von zylindrischen Filterelementen (F) zum Bestücken von Spritzgussteilen, insbesondere Pipettenspitzen (P), umfassend die folgenden Schritte,
- Aufnehmen der zylindrischen Filterelemente (F) als ungeordnetes Schüttgut in einem Aufnahmebehälter (1a), dessen Boden als Siebplatte (1) mit dem Durchmesser der zylindrischen Filterelemente (F) entsprechenden Bohrungen (1.1) ausgebildet ist,
- Ausführen einer Rüttelbewegung am Aufnahmebehälter (1a) zum Überführen der ungeordneten Filterelemente (F) in die Bohrungen (1.1) der Siebplatte (1),
- Überführen der Filterelemente (F) von der Siebplatte (1) in Bohrungen (2.1) einer Pufferplatte (2), **deren Bohrungen (2.1) eine Verlängerung der Siebbohrungen (1.1) der Siebplatte bilden,**
- Bereithalten der Filterelemente (F) in einer vorgegebenen Position in den Bohrungen (2.1) der Pufferplatte (2) **durch eine an jeder Bohrung (2.1) vorgesehene Rückhalteeinrichtung (4),**
- Überführen der Filterelemente (F) von der Pufferplatte (2) in **den Bohrungen (2.1) der Pufferplatte entsprechende** Bohrungen (3.1) einer Transferplatte (3) **nach Freigabe durch die Rückhalteeinrichtung (4)**, und
- Überführen der Transferplatte (3) **nach dem Auffüllen zu** in Gruppen angeordneten Filterelementen (F) zu einer Handlingeinrichtung **durch Abheben der Transferplatte (3) von der Pufferplatte (2)**.

2. Verfahren nach Anspruch 1, wobei die Filterelemente (F) in der Pufferplatte (2) durch die Rückhalteeinrichtung (4) gehalten werden, bis alle Bohrungen (2.1) der Pufferplatte (2) mit wenigstens einem Filterelement (F) besetzt sind.

3. Verfahren nach einem der Ansprüche 1 und 2, wobei an der Transferplatte (3) mittels Sensorelementen (5) der Füllgrad der Pufferplatte (2) überwacht wird.

4. Verfahren nach einem der vorhergehenden Ansprüche, wobei die Filterelemente (F) mittels Unterdruck von der Pufferplatte (2) in die Transferplatte (3) überführt werden.

5. Verfahren nach einem der vorhergehenden Ansprüche, wobei die Rückhalteeinrichtung (4) derart gesteuert wird, dass jeweils nur ein Filterelement in der Bohrung (2.1) der Pufferplatte (2) freigegeben und das nächstfolgende Filterelement zurückgehalten wird.

6. Vorrichtung zum Ausrichten von **zylindrischen** Filterelementen (F) zum Bestücken von Spritzgussteilen, insbesondere Pipettenspitzen (P), umfassend
- einen Aufnahmebehälter (1a) zur Aufnahme der Filterelemente (F) als Schüttgut,
- eine den Boden des Aufnahmebehälters bildende Siebplatte (1) mit **Sieb**bohrungen (1.1) zur Aufnahme einzelner Filterelemente (F),
- eine unter der Siebplatte (1) angeordnete Pufferplatte (2) mit Bohrungen (2.1), **die eine Verlängerung** der Sieb**bohrungen (1.1) bilden,**
**wobei in der Pufferplatte (2) eine Rückhalteeinrichtung (4) angeordnet ist, die in jeder Bohrung (2.1) der Pufferplatte (2) ein Filterelement (F) in einer vorgegebenen Position hält, und**
- eine Transferplatte (3) mit Bohrungen (3.1) entsprechend den Bohrungen der Pufferplatte (2), die relativ zur Pufferplatte (2) beweglich unter dieser angeordnet ist.

7. Vorrichtung nach Anspruch 6, wobei die Mündungsöffnung der Bohrungen (1.1) in der Siebplatte (1) trichterförmig gestaltet ist und vorzugsweise abgerundete Ränder aufweist.

8. Vorrichtung nach Anspruch 6 oder 7, wobei die Siebplatte (1) eine Dickenabmessung aufweist, die größer ist als die Länge eines Filterelementes (F).

9. Vorrichtung nach einem der Ansprüche 6 bis 8, wobei die Pufferplatte (2) eine Dickenabmessung aufweist, die größer ist als die Längsabmessung eines Filterelementes (F).

10. Vorrichtung nach einem der Ansprüche 6 bis 9, wobei unter jeder Bohrung (3.1) der Transferplatte (3) jeweils ein Sensorelement (5) angeordnet ist.

11. Vorrichtung nach einem der Ansprüche 6 bis 10, wobei an jeder Bohrung (3.1) der Transferplatte (3) ein Anschluss zum Anlegen von Unterdruck vorgesehen ist.

12. Vorrichtung nach einem der Ansprüche 6 bis 11, wobei die Transferplatte (3) als Drehplatte (30) ausgebildet ist, auf deren Umfang Gruppen von Bohrungen (3.1) zur Aufnahme von Filterelementen (F) ausgebildet sind.

13. Vorrichtung nach Anspruch 12, wobei auf dem Umfang der Drehplatte (30) eine Handlingeinrichtung (15) für die Entnahme der Filterelemente (F) aus der Drehplatte (30) angeordnet ist.

14. Vorrichtung nach einem oder mehreren der Ansprüche 6 bis 13, wobei die Rückhalteeinrichtung (4) Saugbohrungen auf dem Umfang der Aufnahmebohrungen (2.1) der Pufferplatte (2) aufweist, durch die steuerbar Vakuum angelegbar ist.

## Claims

1. Method for aligning cylindrical filter elements (F) for equipping injection moulded components, in particular pipette tips (P), comprising the following steps,
- receiving the cylindrical filter elements (F) as unsorted bulk material in a receiving container (1a), the bottom of which is designed as a sieve plate (1) with bores (1.1) corresponding to the diameter of the cylindrical filter elements (F),
- carrying out a shaking movement of the receiving container (1a) for transferring the unsorted filter elements (F) into the bores (1.1) of the sieve plate (1),
- transferring the filter elements (F) from the sieve plate (1) into bores (2.1) of a buffer plate (2), the bores (2.1) of which form a prolongation of the sieve bores (1.1) of the sieve plate,
- provision of the filter elements (F) in a pre-determined position in the bores (2.1) of the buffer plate (2) with a retention means (4) envisaged at each bore (2.1),
- transferring the filter elements (F) from the bores (2.1) of the buffer plate (2) into corresponding bores (3.1) of a transfer plate (3) following release by the retention means (4), and
- transferring the transfer plate (3) after filling into the filter elements (F) arranged in groups to a handling means by lifting the transfer plate (3) from the buffer plate (2).

2. Method according to claim 1, wherein the filter elements (F) are held in the buffer plate (2) by the retention means (4) until all bores (2.1) of the buffer plate (2) are filled with at least one filter element (F).

3. Method according to one of the claims 1 and 2, wherein the degree of filling of the buffer plate (2) is monitored on the transfer plate (3) by means of sensor elements (5).

4. Method according to one of the preceding claims, wherein the filter elements (F) are transferred from the buffer plate (2) into the transfer plate (3) by means of underpressure.

5. Method according to one of the preceding claims, wherein the retention means (4) is controlled in such a way that only one filter element each is released in the bore (2.1) of the buffer plate (2) and the next following filter element is retained.

6. Device for aligning cylindrical filter elements (F) for equipping injection moulded components, in particular pipette tips (P), comprising
- a receiving container (1a) for receiving the filter elements (F) as bulk material,
- a sieve plate (1) forming the bottom of the receiving container, with sieve bores (1.1) for receiving individual filter elements (F),
- a buffer plate (2) arranged under the sieve plate (1), with bores (2.1) forming a prolongation of the sieve bores (1.1),
wherein a retention means (4) is arranged in the buffer plate (2), for holding a filter element (F) in each bore (2.1) of the buffer plate (2) in a pre-determined position, and
- a transfer plate (3) with bores (3.1) corresponding to the bores of the buffer plate (2), which are arranged relative to the buffer plate (2) and moveably under the same.

7. Device according to claim 6, wherein the inlet opening of the bores (1.1) in the sieve plate (1) are of a funnel-shaped design and preferably have rounded edges.

8. Device according to claim 6 or 7, wherein the sieve plate (1) has a thickness dimension that is greater than the length of a filter element (F).

9. Device according to one of the claims 6 to 8, wherein the buffer plate (2) has a thickness dimension that is greater than the length dimension of a filter element (F).

10. Device according to one of the claims 6 to 9, wherein one sensor element (5) each is arranged under every bore (3.1) of the transfer plate (3).

11. Device according to one of the claims 6 to 10, wherein a connection for applying underpressure is envisaged at each bore (3.1) of the transfer plate (3).

12. Device according to one of the claims 6 to 11, wherein the transfer plate (3) is designed as a rotating plate (30), around the circumference of which groups of bores (3.1) for receiving filter elements (F) are formed.

13. Device according to claim 12, wherein a handling means (15) for removing the filter elements (F) from the rotating plate (30) is arranged around the circumference of the rotating plate (30).

14. Device according to one or more of the claims 6 to 13, wherein the retention means (4) has suction bores around the circumference of the receiving bores (2.1) of the buffer plate (2), through which a vacuum can be applied in a controllable way.

## Revendications

1. Procédé servant à orienter des éléments filtrants (F) cylindriques servant à équiper des pièces de moulage par injection, en particulier des pointes de pipette (P), comprenant les étapes suivantes
- de logement des éléments filtrants (F) cylindriques en tant qu'articles en vrac non classés dans un contenant de logement (1a), dont le fond est réalisé en tant que plaque de criblage (1) avec des alésages (1.1) correspondant au diamètre des éléments filtrants (F) cylindriques,
- de réalisation d'un mouvement d'agitation au niveau du contenant de logement (1a) pour transférer les éléments filtrants (F) non classés dans les alésages (1.1) de la plaque de criblage (1),
- de transfert des éléments filtrants (F) de la plaque de criblage (1) dans des alésages (2.1) d'une plaque tampon (2), dont les alésages (2.1) forment un prolongement des alésages de criblage (1.1) de la plaque de criblage,
- de maintien des éléments filtrants (F) dans une position spécifiée dans les alésages (2.1) de la plaque tampon (2) par un dispositif de retenue (4) prévu au niveau de chaque alésage (2.1),
- de transfert des éléments filtrants (F) de la plaque tampon (2) dans des alésages (3.1), correspondant aux alésages (2.1) de la plaque tampon, d'une plaque de transfert (3) après déblocage par le dispositif de retenue (4), et
- de transfert de la plaque de transfert (3) après le remplissage des éléments filtrants (F) disposés en des groupes vers un dispositif de manutention en soulevant la plaque de transfert (3) de la plaque tampon (2).

2. Procédé selon la revendication 1, dans lequel les éléments filtrants (F) sont maintenus dans la plaque tampon (2) par le dispositif de retenue (4) jusqu'à ce que tous les alésages (2.1) de la plaque tampon (2) soient occupés par au moins un élément filtrant (F).

3. Procédé selon l'une quelconque des revendications 1 et 2, dans lequel le niveau de remplissage de la plaque tampon (2) est surveillé au niveau de la plaque de transfert (3) au moyen d'éléments de capteur (5).

4. Procédé selon l'une quelconque des revendications précédentes, dans lequel les éléments filtrants (F) sont transférés au moyen d'une dépression depuis la plaque tampon (2) dans la plaque de transfert (3).

5. Procédé selon l'une quelconque des revendications précédentes, dans lequel le dispositif de retenue (4) est commandé de telle manière que respectivement seulement un élément filtrant est débloqué dans l'alésage (2.1) de la plaque tampon (2) et l'élément filtrant qui suit immédiatement après est retenu.

6. Dispositif servant à orienter des éléments filtrants (F) cylindriques servant à équiper des pièces moulées par injection, en particulier des pointes de pipette (P), comprenant
- un contenant de logement (1a) servant à recevoir les éléments filtrants (F) en tant qu'articles en vrac,
- une plaque de criblage (1) formant le fond du contenant de logement avec des alésages de criblage (1.1) servant à loger divers éléments filtrants (F),
- une plaque tampon (2) disposée sous la plaque de criblage (1), avec des alésages (2.1), qui forment un prolongement des alésages de criblage (1.1),
dans lequel est disposé dans la plaque tampon (2) un dispositif de retenue (4), qui maintient un élément filtrant (F) dans une position prédéfinie dans chaque alésage (2.1) de la plaque tampon (2), et
- une plaque de transfert (3) avec des alésages (3.1) correspondant aux alésages de la plaque tampon (2), qui est disposée par rapport à la plaque tampon (2) de manière mobile sous celle-ci.

7. Dispositif selon la revendication 6, dans lequel l'ouverture d'embouchure des alésages (1.1) dans la plaque de criblage (1) est configurée en forme d'entonnoir et présente de préférence des bords arrondis.

8. Dispositif selon la revendication 6 ou 7, dans lequel la plaque de criblage (1) présente une dimension dans l'épaisseur, qui est supérieure à la longueur d'un élément filtrant (F).

9. Dispositif selon l'une quelconque des revendications 6 à 8, dans lequel la plaque tampon (2) présente une dimension dans l'épaisseur, qui est supérieure à la dimension dans la longueur d'un élément filtrant (F).

10. Dispositif selon l'une quelconque des revendications 6 à 9, dans lequel respectivement un élément de capteur (5) est disposé sous chaque alésage (3.1) de la plaque de transfert (3).

11. Dispositif selon l'une quelconque des revendications 6 à 10, dans lequel un raccord servant à appliquer une dépression est prévu au niveau de chaque alésage (3.1) de la plaque de transfert (3).

12. Dispositif selon l'une quelconque des revendications 6 à 11, dans lequel la plaque de transfert (3) est réalisée en tant que plaque rotative (30), sur la périphérie de laquelle des groupes d'alésages (3.1) sont réalisés pour loger des éléments filtrants (F).

13. Dispositif selon la revendication 12, dans lequel un dispositif de manutention (15) pour le retrait des éléments filtrants (F) hors de la plaque rotative (30) est disposé sur la périphérie de la plaque rotative (30).

14. Dispositif selon l'une quelconque ou plusieurs des revendications 6 à 13, dans lequel le dispositif de retenue (4) présente des alésages d'aspiration sur la périphérie des alésages de logement (2.1) de la plaque tampon (2), par lesquels un vide peut être appliqué de manière commandable.
